# EUROPEAN PATENT SPECIFICATION

(11) **EP 3 317 151 B1**
(45) Date of publication and mention of the grant of the patent: **17.01.2024**
(21) Application number: 16818327.5
(22) Date of filing: 31.05.2016
(51) Int. Cl.: G01S 13/931, B60T 7/22, B60T 7/12, B60Q 1/44, G01S 13/93, G08G 1/16

(54) **METHOD AND SYSTEM FOR ALERTING A DRIVER IN A FOLLOWER VEHICLE**
VERFAHREN UND SYSTEM ZUR ALARMIERUNG EINES FAHRERS IN EINEM FOLGENDEN FAHRZEUG
PROCÉDÉ ET SYSTÈME PERMETTANT D'ALERTER UN CONDUCTEUR DANS UN VÉHICULE SUIVEUR

(30) Priority: 01.07.2015 SE 1550928
(43) Date of publication of application: 09.05.2018
(73) Proprietor: Scania CV AB, 151 87 Södertälje (SE)
(72) Inventor: ALAM, Assad, 121 31 Enskededalen (SE); BEMLER, Marie, 647 35 Mariefred (SE)
(74) Representative: Scania CV AB
(86) International application number: PCT/SE2016/050507
(87) International publication number: WO 2017/003341

(56) References cited:
- WO-A1-2014/145918
- DE-A1- 10 005 867
- DE-A1-102008 013 103
- DE-A1-102011 112 985
- US-A- 5 680 097
- US-A1- 2008 312 834
- US-A1- 2008 312 834
- US-B1- 6 278 360
- US-B1- 6 624 747

## Description

### TECHNICAL FIELD

This document disclose a method and an intervening driver assistant system. More particularly, a method and an intervening driver assistant system in a first vehicle are described, for alerting a driver in a follower vehicle of an obstacle in front of the first vehicle.

### BACKGROUND

Vehicles are sometimes equipped with an intervening driver assistant system such as e.g. an Automatic Emergency Brake (AEB) system. Such AEB system are mandated by legislation on all newly produced heavy vehicles, like trucks, busses etc. In short, the AEB helps the driver to avoid collisions by using radar and/ or camera sensors. The driver is first given a warning if the AEB system detects, through its sensors, that a collision is about to occur. Such warning may comprise an ignited lamp on the dash board, a waning on a display or similar. If the driver does not engage the brakes and the distance to the preceding vehicle (or other ahead obstacle) continues to decrease, a relatively mild brake is automatically applied to assist/ alert the driver. If the distance is further decreased and the driver has not stepped on the brake pedal, the braking is automatically applied in full.

Hence, safety is significantly improved and many lives are saved in the process with the AEB system. It may be noted that the above described functionality of the AEB system may be implemented under different trade names by different manufacturers.

However, for a vehicle driving behind an ahead vehicle, which may not be equipped with an AEB system, such sudden brake made by the vehicle in front may come as a complete surprise. In particular when driving behind a heavy vehicle at a close distance, as the driver of the follower vehicle may not be able to see what is occurring in front of the ahead vehicle.

Thus a sudden hard brake made by the ahead vehicle may come as a complete surprise to the driver in the follower vehicle, who may not be able to react and brake the vehicle fast enough to avoid an accident. Thus the AEB system unfortunately may have negative impact on the follower vehicles safety.

Another example of intervening driver assistant system is a turn assistant of a vehicle, which may alert unprotected road users when turning.

For avoiding such accidents, it would be desired to give the driver of the follower vehicle hint or warning of the upcoming situation, to give him/ her time to react on braking of the ahead vehicle.

Document US2013211687 and document US2006097570 describes different embodiments of warnings to the driver of a follower vehicle, in connection with automatic braking. The warning is emitted by braking lights, warning lights and/ or signal horn. The warning is however emitted later than the alert provided to the driver of the ahead vehicle.

Document US2014032094 describes a warning provided to the driver of a follower vehicle when the automatic brake system of the ahead vehicle is starting to brake the vehicle. However, no alert is provided to the driver in the follower vehicle, for preparing to brake. Further, no escalation in warnings is provided.

Document DE10218652 and document US2012283925 describes warning lights of a vehicle, able to emit light with different intensity or frequency to inform the follower vehicle about an emergency brake of the ahead vehicle. It is suggested that the ordinary brake light may flash or emit light with varying strength. However, the documents only discusses ordinary braking, not automated braking.

Also, US2008312834 and DE102008013103 describe systems for automated braking.

As these described scenarios, and similar variants of them, may lead to increased risks of accidents, it is desirable to find a solution.

### SUMMARY

It is therefore an object of this invention to solve at least some of the above problems and provide a solution for enhanced traffic safety.

According to a first aspect of the invention, this objective is achieved by a method for alerting a driver in a follower vehicle of an obstacle in front of a first vehicle according to claim 1.

According to a second aspect of the invention, this objective is achieved by an intervening driver assistant system according to claim 4.

Thanks to the described aspects, the driver of the follower vehicle is given an alert before the first vehicle starts to brake. Thereby the attention of the follower vehicle driver is directed towards the impending braking of the first vehicle and he/ she is given time to react by placing the foot on the brake pedal and prepare for braking. Thus the risk of surprising the driver in a follower vehicle by a sudden braking of the ahead vehicle is reduced. Consequently also the risk of an accident is reduced, leading to enhanced traffic safety.

Other advantages and additional novel features will become apparent from the subsequent detailed description.

### FIGURES

Embodiments of the invention will now be described in further detail with reference to the accompanying figures, in which:
- **Figure** 1A: illustrates a follower vehicle and a preceding vehicle according to an embodiment of the invention;
- **Figure 1B**: illustrates a follower vehicle and a preceding vehicle according to an embodiment of the invention;
- **Figure 2**: illustrates a follower vehicle interior according to an embodiment;
- **Figure 3**: illustrates a follower vehicle interior according to an embodiment;
- **Figure 4**: is a flow chart illustrating an embodiment of the method;
- **Figure 5**: is an illustration depicting a system according to an embodiment.

### DETAILED DESCRIPTION

Embodiments of the invention described herein are defined as a method and an intervening driver assistant system, which may be put into practice in the embodiments described below. These embodiments may, however, be exemplified and realised in many different forms and are not to be limited to the examples set forth herein; rather, these illustrative examples of embodiments are provided so that this disclosure will be thorough and complete.

Still other objects and features may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

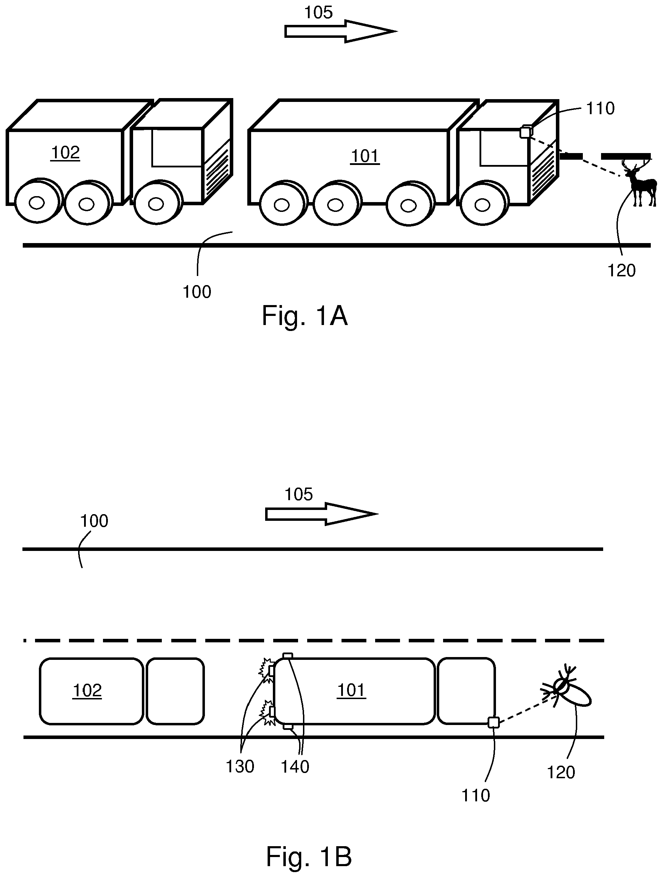

**Figure 1A** illustrates a scenario with a first vehicle **101** having an intervening driver assistant system such as e.g. an automatic emergency brake (AEB) system and a follower vehicle **102.** Both are driving in a driving direction **105** on a road **100.** The first vehicle 101 with the intervening driver assistant system, comprises a detector **110** configured for detecting the obstacle **120** in front of the first vehicle 101 in the driving direction 105.

The vehicles 101, 102 may comprise e.g. a truck, a bus, a car, a motorcycle or any similar vehicles or other means of conveyance. The vehicles 101, 102 may comprise vehicles of the same, or different types. Further, the first vehicle 101 may be driver controlled or driverless autonomously controlled vehicles in different embodiments. However, for enhanced clarity, the first vehicle 101 is subsequently described as having a driver.

The follower vehicle 102 and the preceding vehicle 101 may be organised in a platoon or vehicle convoy, wherein the vehicles 101, 102 are driving in coordination after each other with only a small distance between the vehicles 101, 102, such as some decimetres or some meters, e.g. 20-40 meters. However, the inter-vehicular distance or gap may be a variable time gap e.g. between 0.1-3 seconds, or any other appropriate time interval.

Further, the gap between the vehicles 101, 102 may vary with the speed of the vehicles 101, 102, as the time gap will create length distances of different length in different vehicle speeds (except when driving at very low speed, approaching a stationary condition, where a certain minimum distance in length may be desired).

However, the vehicles 101, 102 may be just coincidently driving one after another, without any particular coordination.

The detector 110 may comprise an on-board rangefinder sensor such as e.g. a laser rangefinder, a radar unit, a camera, a lidar, an ultrasonic sensor emitting an ultrasonic wave and detecting and analysing the reflections, or other similar devices.

The obstacle 120 detected in front of the first vehicle 101 may comprise e.g. an animal, a vehicle, a person, or basically any obstacle limiting or hindering the vehicle 101.

The problem with previously described solutions in the background section is that no preview information or alert is provided to the driver of the follower vehicle 102. Thereby, he/ she may react too late to be able to brake, or steer away, in time. Thus, to alert the driver of the follower vehicle 102 that a collision avoidance action is about to occur, the intervening driver assistant system may issue a suitable indication is also issued to the follower vehicle, simultaneously with providing a collision warning in the instrument cluster to the driver of the first vehicle 101. This indication to the driver of the follower vehicle 102 may comprise e.g. that the brake lights of the first vehicle 101 are turned on as soon as a collision warning is issued by the intervening driver assistant system of the first vehicle 101. Another indication could be that the warning lights of the first vehicle 101 are initiated. Alternatively a sound could be used, for example by activating the horn of the first vehicle 101.

The indications may also be used with respect to what stage the collision avoidance is in. For example, if the collision avoidance is issued by the intervening driver assistant system of the first vehicle 101, the brake lights may be turned on with a low intensity. Further, the brake light intensity may become stronger when making the alert brake and then stronger when an automatic emergency braking, or automatic full braking is actuated.

Alternatively, in some embodiments, different lights or sounds of the first vehicle 101 can be combined. For example, when the collision warning is issued, the warning lights may be turned on. Then when the warning brakes are turned on, the brake lights may be activated. Finally, when the automatic emergency braking/ full braking is activated the vehicle horn may be activated in some embodiments.

By giving the driver of the follower vehicle 102 a hint in advance that the intervening driver assistant system of the ahead vehicle 101 has detected an obstacle 120 and will brake within soon, the driver is given a time period compensating for his/ her reaction time, which may be estimated to 1.6 seconds or there about (this is however somewhat different for different individuals depending on e.g. age). Thereby the attention of the follower driver is increased and he/ she becomes aware of the possible collision avoidance situation in front of the first vehicle 101.

Thereby, an accident may be avoided and the life of the driver in the follower vehicle as well as the subject vehicle with the intervening driver assistant system may be saved, also when time period of the advance alert is very short, such as a second, or parts of a second.

**Figure** 1B illustrates a scenario similar to, or identical with the one already illustrated in Figure 1A, previously discussed.

In the illustrated example, the first vehicle 101 is igniting the braking lights 130 and/ or the warning lights 140 when the intervening driver assistant system of the first vehicle 101 is activated, i.e. generates a first (visual) alert to the driver in the first vehicle 101, and simultaneously, or substantially simultaneously ignites any or both of the braking lights 130 and/ or the warning lights 140.

In some embodiments, an escalation in alerting intensity may be made in order to reflect the escalation of the intervening driver assistant system of the first vehicle 101 (visual alert, warning brake and full brake, respectively). Such escalation may involve emitting light at different wavelength, i.e. in different colours; or intermittently emitted light at different frequencies, for example.

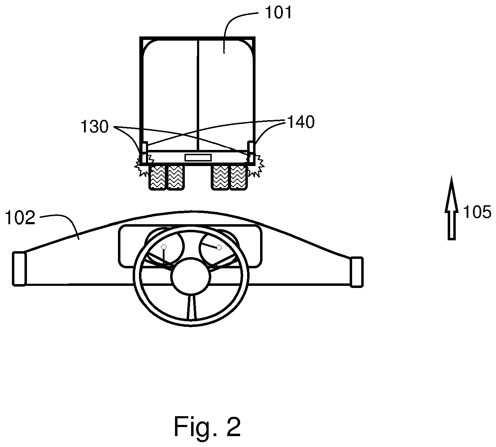

**Figure** 2 illustrates an interior view of how the driver of the follower vehicle 102 may perceive the situation described in Figure 1 A/ Figure 1B, according to an embodiment.

In the illustrated example, the detector 110 of the intervening driver assistant system of the first vehicle 101 has detected an obstacle 120 in front of the first vehicle 101, in the driving direction 105. Thus an alert has been activated for alerting the driver of the first vehicle 101. Also, an additional alert has been activated for alerting the driver of the follower vehicle 102. Such alert may comprise activation of the braking lights 130 of the first vehicle 101.

However, in other embodiments, the alert may be provided by activation of the warning lights 140, activation of the horn of the first vehicle 101, activation of both the braking lights 130 and the warning lights 140 of the first vehicle 101 in some embodiments. In yet some embodiments, the braking lights 130, the warning lights 140 and the horn of the first vehicle 101 may all be activated simultaneously, for alerting the driver of the follower vehicle 102.

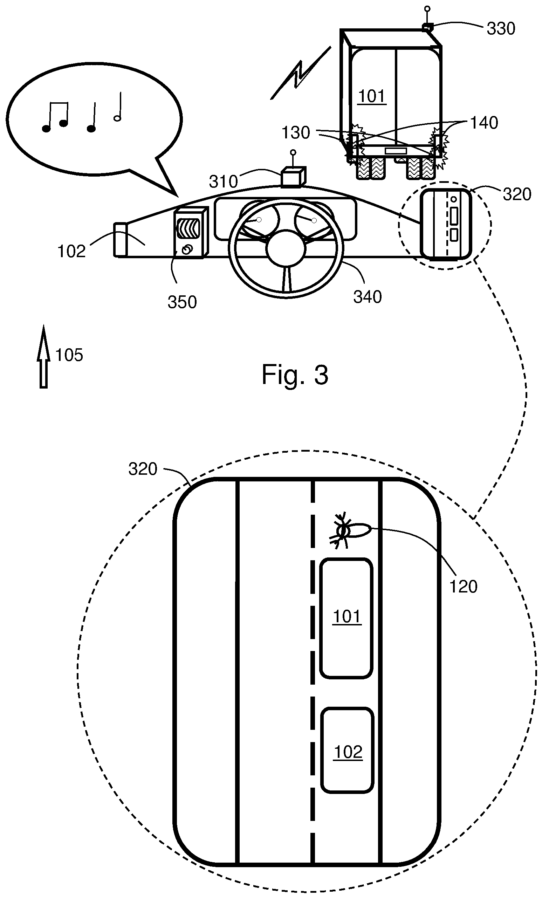

**Figure 3** illustrates an interior view of how the driver of the follower vehicle 102 may perceive the situation described in Figure 1 A/ Figure 1B, according to an embodiment.

In the illustrated embodiment, the driver of the follower vehicle 102 is alerted by various alerting devices on the first vehicle 101, like e.g. the braking lights 130, the warning lights 140 and/ or the horn of the first vehicle 101.

However, in addition the first vehicle 101 comprises a wireless transmitter **330.The** wireless transmitter 330 may transmit wireless signals to be received by a wireless receiver **310** in the follower vehicle 102.

The wireless communication may be made by e.g. Vehicle-to-Vehicle (V2V) signal, or any other wireless signal based on, or at least inspired by wireless communication technology such as Wi-Fi, Wireless Local Area Network (WLAN), Ultra Mobile Broadband (UMB), Bluetooth (BT), or infrared transmission to name but a few possible examples of wireless communications.

Upon receiving the wireless signal from the wireless transmitter 330 of the first vehicle 101, an alert may be presented to the driver of the follower vehicle 102, such as e.g. via a visual alert on a display **320,** a tactile/ haptic alert via vibrations in a device **340** in the follower vehicle 102, such as e.g. the steering wheel, and/ or an acoustic alert via a loudspeaker **350.** The acoustic alert may be a voice message, a sound, a melody or similar. The visual alert on the display 320 may comprise an image of the situation in front of the first vehicle 101, according to some embodiments.

In some embodiments, an escalation in alerting intensity may be made in order to reflect the escalation of the intervening driver assistant system of the first vehicle 101 (visual alert, warning brake and full brake, respectively). Such escalation may involve using different acoustic indications, or acoustic indications of increasing volume and/ or emitted light at different wavelength, i.e. in different colours; or intermittently emitted light at different frequencies, for example, on the display 320. Also, or alternatively, the vibrations of the tactile/ haptic alert in the device 340 may be emitted with different intensity.

By the made escalation in some embodiments, hazards resulting from an automatic braking process posed to the follower vehicle 102 behind the first vehicle 101 is reduced, as the driver of the follower vehicle 102 becomes alerted and aware of the increasing danger, and thereby traffic safety is enhanced.

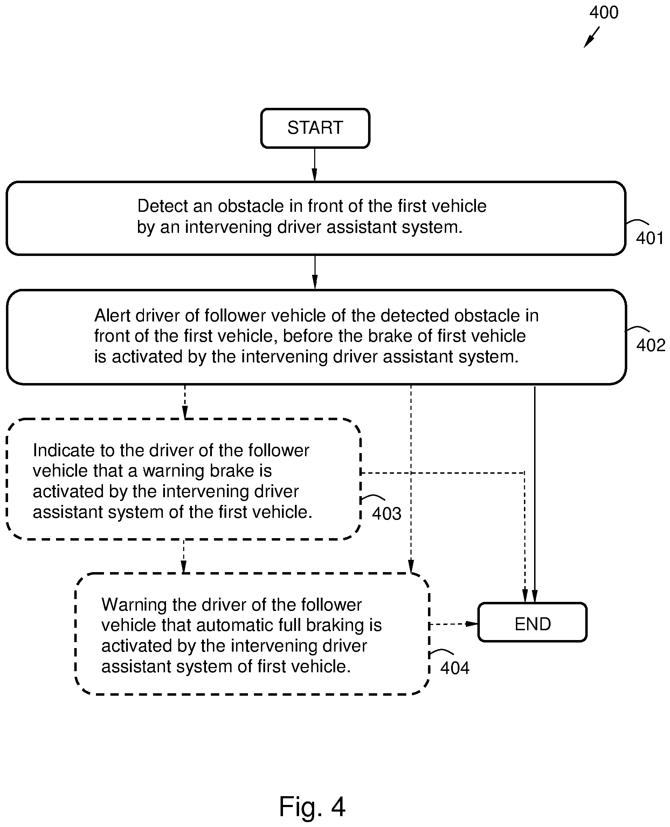

**Figure 4** illustrates an example of a method **400** in a first vehicle 101 according to an embodiment. The flow chart in Figure 4 shows the method 400 in the first vehicle 101 having an intervening driver assistant system, for alerting a driver in a follower vehicle 102 of an obstacle 120 in front of the first vehicle 101. The first vehicle 101 is thus driving ahead of the follower vehicle 102, in the driving direction 105.

The vehicles 101, 102 may be any arbitrary kind of means for conveyance, such as a truck, a bus, a car or a motorcycle, or other similar vehicle.

The intervening driver assistant system may comprise an automatic emergency brake (AEB) system in some embodiments, or a right/ left turn assistance system, a system for electronic brakeforce distribution, a system for electronic brakeforce limitation, or other similar driver assist systems. The intervening driver assistant system may be configured for autonomously braking the vehicle 101, i.e. by automatically adjust the force applied to each of a vehicle's brakes, based on appearing obstacles 120, road conditions, speed, loading, etc.

In order to be able to correctly alert a driver in a follower vehicle 102, the method 400 may comprise a number of steps **401-404.** However, some of these steps 401-404 may be performed solely in some alternative embodiments, like e.g. step 403 and/ or 404. Further, the described steps 401-404 may be performed in a somewhat different chronological order than the numbering suggests. The method 400 may comprise the subsequent steps:
**Step 401** comprises detecting the obstacle 120 in front of the first vehicle 101 by the intervening driver assistant system.

The obstacle 120 may be detected by a detector 110. The detector 110 may be based on an on-board rangefinder sensor such as e.g. a laser rangefinder, a radar unit, a camera, a lidar, an ultrasonic sensor emitting an ultrasonic wave and detecting and analysing the reflections, or other similar devices.

The detected obstacle 120 may comprise a human, an animal, a vehicle, a dropped piece of luggage or freight, or any other similar obstacle not appropriate on a road.

**Step 402** comprises alerting the driver in the follower vehicle 102, of the detected 401 obstacle 120 in front of the first vehicle 101, before the brakes of the first vehicle 101 are activated by the intervening driver assistant system.

Thereby, the driver in the follower vehicle 102 is alerted together with an alert for the driver of the first vehicle 101, if this vehicle 101 has a driver. Such first vehicle alerting may be made by a visual indication on a display or a dashboard; by a sound or spoken message via a loudspeaker and/ or a tactile vibration via the steering wheel or car seat of the vehicle 101, in different embodiments. Such a display may also be a mobile phone, a computer display or the like and the display may be used both internal as well as external the vehicle.

The substantially simultaneous alert provided to the driver of the follower vehicle 102 may be made via the braking lights 130 of the first vehicle 101, the warning lights 140 of the first vehicle 101 and/ or the horn of the first vehicle 101 in different embodiments. The alert may comprise flashing with the lights 130, 140 in some embodiments; or alternatively emitting light continuously.

In some embodiments, the alert may be given about 1-3 seconds before the brake is activated in some embodiments.

**Step 403** which may be performed only in some embodiments, may comprise indicating to the driver in the follower vehicle 102 that a warning brake is activated by the intervening driver assistant system of the first vehicle 101, in some embodiments.

The indication may be made via the braking lights 130 of the first vehicle 101, the warning lights 140 of the first vehicle 101 and/ or the horn of the first vehicle 101 in different embodiments.

**Step 404** which may be performed only in some embodiments, may comprise warning the driver in the follower vehicle 102 that automatic emergency braking, or automatic full braking, is activated by the intervening driver assistant system of the first vehicle 101, in some alternative embodiments.

The indication may be made via the braking lights 130 of the first vehicle 101, the warning lights 140 of the first vehicle 101 and/ or the horn of the first vehicle 101 in different embodiments.

The alert 402, the indication 403, and/ or the warning 404 may be distinct according to some embodiments. Further, the alert 402, the indication 403, and/ or the warning 404 may be transmitted in an escalating manner, e.g. by increased intensity, by emitting light with different wave length, by emitting light with an increased frequency for example.

Thereby the driver of the follower vehicle 102 may distinguish the alert 402, the indication 403, and/ or the warning 404 from each other and correctly interpret the respective alert 402, indication 403, and/ or warning 404.

Furthermore, according to some embodiments, the method 400 may comprise generating and transmitting wireless control signals for activating the brakes also of the follower vehicle 102, substantially simultaneously with the braking of the first vehicle 101. Alternatively, the method 400 may comprise generating and transmitting wireless control signals for presenting a recommendation to the driver of the follower vehicle 102 to brake, or handle the situation based on the logic of the follower vehicle 102. Further, in some embodiments, a description such as an image of an obstacle 120 in front of the first vehicle 101 may be wirelessly transmitted to the follower vehicle 102, for being presented to the driver therein.

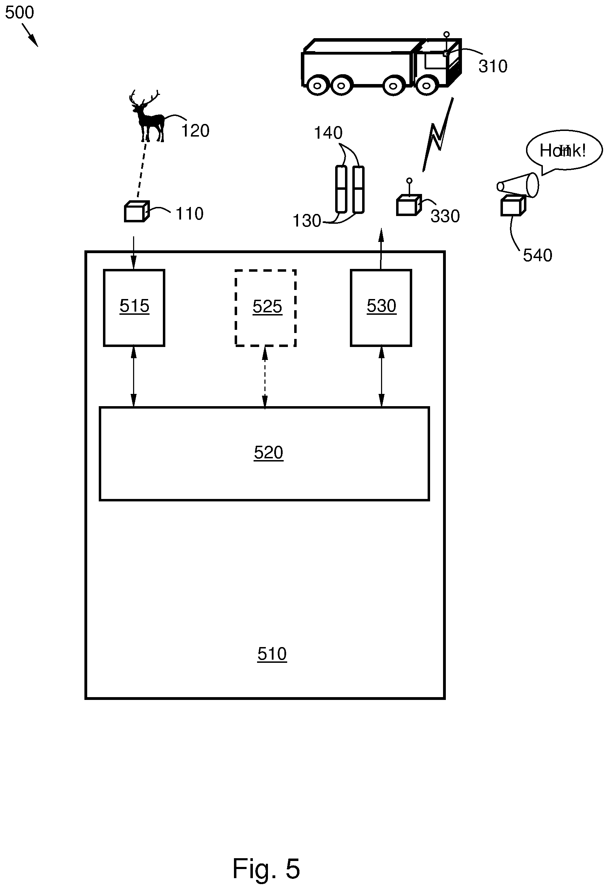

**Figure 5** illustrates an embodiment of a system **500** in a first vehicle 101. The system 500 may be an intervening driver assistant system, such as e.g. an emergency alert brake system, or a turn assistance system in different embodiments. The intervening driver assistant system 500 in the first vehicle 101 may be configured for alerting a driver in a follower vehicle 102 of an obstacle 120 in front of the first vehicle 101, detected by the intervening driver assistant system 500. Thus the intervening driver assistant system 500 is configured for performing at least some of the previously described steps 401-404 according to the method 400 described above and illustrated in Figure 4.

The intervening driver assistant system 500 comprises a detector 110, configured for detecting the obstacle 120 in front of the first vehicle 101, in the driving direction 105. Further the intervening driver assistant system 500 comprises an alerting device 130, 140, **540** configured for alerting the driver in the follower vehicle 102, of the detected obstacle 120 in front of the first vehicle 101, before the brakes of the first vehicle 101 are activated by the intervening driver assistant system 500.

The detector 110 may comprise e.g. a radar, lidar, camera or similar situated in the front part of the first vehicle 101.

The alerting device 130, 140, 540 may comprise e.g. braking lights, warning lights and/ or horn of the first vehicle 101 or other alerting device 130, 140, 540 in the first vehicle 101, detectable for the driver in the follower vehicle 102.

The alerting device 130, 140, 540 may be configured for emitting an incrementing alert to be perceived by the driver in the follower vehicle 102, via the alerting device 130, 140, 540. It is thereby possible for the follower vehicle driver to distinguish between an alert, an indication and/ or a warning.

Furthermore, the intervening driver assistant system 500 may comprise a transmitter 330 configured to wirelessly transmit information concerning the detected obstacle 120 in front of the first vehicle 101, for alerting the driver in the follower vehicle 102 of the detected obstacle 120 via a local alerting device 320, 340, 350 in the follower vehicle 102.

The intervening driver assistant system 500 may in some embodiments also be configured for generating and transmitting control signals, via the transmitter 330, for controlling the brakes of the follower vehicle 102, simultaneously with braking the first vehicle 101. Thereby accidents may be avoided also in case the follower vehicle driver is inattentive.

Furthermore, the intervening driver assistant system 500 may comprise a control unit 510, configured for controlling the actions performed by the intervening driver assistant system 500. The control unit 510 may comprise a receiving circuit **515,** configured for receiving signals from the detector 110 via a wired or wireless interface.

The control unit 510 may comprise a processor **520** configured for performing computations for alerting a driver in a follower vehicle 102 of an obstacle 120 in front of the first vehicle 101. Thus the processor 520 may be configured for performing the method 400 according to at least some of the previously described steps 401-404 of the method 400.

Such processor 520 may comprise one or more instances of a processing circuit, i.e. a Central Processing Unit (CPU), a processing unit, a processing circuit, a processor, an Application Specific Integrated Circuit (ASIC), a microprocessor, or other processing logic that may interpret and execute instructions. The herein utilised expression "processor" may thus represent a processing circuitry comprising a plurality of processing circuits, such as, e.g., any, some or all of the ones enumerated above.

Furthermore, the control unit 510 may comprise a memory **525** in some embodiments. The optional memory 525 may comprise a tangible, physical device utilised to store data or programs, i.e., sequences of instructions, on a temporary or permanent basis. According to some embodiments, the memory 525 may comprise integrated circuits comprising siliconbased transistors. The memory 525 may comprise e.g. a memory card, a flash memory, a USB memory, a hard disc, or another similar volatile or non-volatile storage unit for storing data such as e.g. ROM (Read-Only Memory), PROM (Programmable Read-Only Memory), EPROM (Erasable PROM), EEPROM (Electrically Erasable PROM), etc. in different embodiments.

Further, the control unit 510 may comprise a signal transmitter **530.** The signal transmitter 530 may be configured for transmitting a control signal over a wired or wireless interface in some embodiments, for an alerting device 130, 140, 540 in the first vehicle 101, or a wireless transmitter 330.

The previously described steps 401-404 to be performed by the intervening driver assistant system 500 may be implemented through the one or more processors 520 within the control unit 510, together with computer program product for performing at least some of the functions of the steps 401-404. Thus a computer program product, comprising instructions for performing the steps 401-404 in the control unit 510 may perform the method 400 comprising at least some of the steps 401-404 for alerting a driver in a follower vehicle 102 of an obstacle 120 in front of the first vehicle 101, when the computer program is loaded into the one or more processors 520 of the control unit 510.

The computer program product mentioned above may be provided for instance in the form of a tangible data carrier carrying computer program code for performing at least some of the step 401-404 according to some embodiments when being loaded into the one or more processors 520 of the control unit 510. The data carrier may be, e.g., a hard disk, a CD ROM disc, a memory stick, an optical storage device, a magnetic storage device or any other appropriate medium such as a disk or tape that may hold machine readable data in a nontransitory manner. The computer program product may furthermore be provided as computer program code on a server and downloaded to the control unit 510 remotely, e.g., over an Internet or an intranet connection.

Further, some embodiments may comprise a first vehicle 101, comprising the intervening driver assistant system 500, such as e.g. an automatic emergency brake system, configured for alerting a driver in a follower vehicle 102 of an obstacle 120 in front of the first vehicle 101.

Furthermore, some embodiments may comprise a vehicle 102, such as a follower vehicle 102, comprising a receiver 310 configured for wirelessly receiving information concerning a detected obstacle 120 in front of another ahead vehicle 101, from the other vehicle 101. The vehicle 102 further comprises a local alerting device 320, 340, 350 configured for alerting the driver in the vehicle 102 of the detected obstacle 120 in front of the other vehicle 101, before the brakes of the other vehicle 101 are activated by an intervening driver assistant system 500 of the other vehicle 101. The local alerting device 320, 340, 350 may comprise e.g. a display in the vehicle 102, a tactile device in the steering wheel or car seat of the vehicle 102, a loudspeaker or horn of the follower vehicle 102, or any similar device.

In some embodiments, the follower vehicle 102 may comprise a set of brakes configured for braking the vehicle 102 when receiving an instruction via a wireless interface from the intervening driver assistant system 500 of the first vehicle 101. Thus the braking of the follower vehicle 102 may be coordinated with the braking of the first vehicle 101 and an accident may be avoided, also when the driver of the follower vehicle 102 is inattentive; or in case there is no driver in the follower vehicle 102; i.e. when the follower vehicle 102 is autonomously driven.

Furthermore, in some embodiments, the follower vehicle 102 may propagate the alert/ indication/ warning to a further following vehicle. Thereby, accidents with other further follower vehicles may be avoided.

The terminology used in the description of the embodiments as illustrated in the accompanying drawings is not intended to be limiting of the described method 400; the intervening driver assistant system 500, the computer program, the first vehicle 101 and/ or the follower vehicle 102. Various changes, substitutions or alterations may be made, without departing from invention embodiments as defined by the appended claims.

## Claims

1. A method (400) for alerting a driver in a follower vehicle (102) of an obstacle (120) in front of a first vehicle (101), said first vehicle having an intervening driver assistant system (500); which method (400) comprises:
detecting (401) the obstacle (120) in front of the first vehicle (101) by the intervening driver assistant system (500); and **characterized by**
alerting (402) the driver in the follower vehicle (102), of the detected (401) obstacle (120) in front of the first vehicle (101), before the brakes of the first vehicle (101) are activated by the intervening driver assistant system (500), wherein the alerting is performed by emitting an incrementing alert to be perceived by the driver in the follower vehicle (102) in the form of emitted light at different wavelength, i.e. in different colours.

2. The method (400) according to claim 1, further comprising
indicating (403) to the driver in the follower vehicle (102) that a warning brake is activated by the intervening driver assistant system (500) of the first vehicle (101).

3. The method (400) according to any of claim 1 or claim 2, further comprising
warning (404) the driver in the follower vehicle (102) that automatic full braking is activated by the intervening driver assistant system (500) of the first vehicle (101).

4. An intervening driver assistant system (500) for a first vehicle (101), for alerting a driver in a follower vehicle (102) of an obstacle (120) in front of the first vehicle (101), detected by the driver assistant system (500); wherein the intervening driver assistant system (500) comprises:
a detector (110), configured for detecting the obstacle (120) in front of the first vehicle (101); and **characterized by**
an alerting device (130, 140, 540) configured for alerting the driver in the follower vehicle (102), of the detected obstacle (120) in front of the first vehicle (101), before the brakes of the first vehicle (101) are activated by the intervening driver assistant system (500), wherein the alerting device (130, 140, 540) is configured for emitting an incrementing alert to be perceived by the driver in the follower vehicle (102) in the form of emitted light at different wavelength, i.e. in different colours.

5. The intervening driver assistant system (500) according to claim 4, wherein the alerting device (130, 140, 540) comprises braking light (130) of the first vehicle (101), warning lights (140) of the first vehicle (101), horn (540) of the first vehicle (101), or other alerting device (130, 140, 540) in the first vehicle (101), detectable for the driver in the follower vehicle (102).

6. The intervening driver assistant system (500) according to any of claims 4-5, further comprising:
a transmitter (330) configured to wirelessly transmit information concerning the detected obstacle (120) in front of the first vehicle (101), for alerting the driver in the follower vehicle (102) of the detected obstacle (120) via a local alerting device (320, 340, 350) in the follower vehicle (102).

7. The intervening driver assistant system (500) according to claim 6, wherein the transmitter (330) is further configured to transmit wireless signals for activating the brakes of the follower vehicle (102).

8. A computer program comprising program code for performing a method (400) according to any of claims 1-3 when the computer program is executed in a computer in the first vehicle (101) with an intervening driver assistant system (500) according to any of claims 4-7.

9. A first vehicle (101) comprising the intervening driver assistant system (500) according to any of claims 4-7.

## Patentansprüche

1. Verfahren (400) zur Alarmierung eines Fahrers in einem folgenden Fahrzeug (102) aufgrund eines Hindernisses (120) vor einem ersten Fahrzeug (101), wobei das erste Fahrzeug ein eingreifendes Fahrerassistenzsystem (500) aufweist; wobei das Verfahren (400) umfasst:
Erfassen (401) des Hindernisses (120) vor dem ersten Fahrzeug (101) durch das eingreifende Fahrerassistenzsystem (500); und **gekennzeichnet durch**
Alarmieren (402) des Fahrers in dem folgenden Fahrzeug (102) aufgrund des erfassten (401) Hindernisses (120) vor dem ersten Fahrzeug (101), bevor die Bremsen des ersten Fahrzeugs (101) von dem eingreifenden Fahrerassistenzsystem (500) aktiviert werden, wobei das Alarmieren durch Ausgeben eines sich steigernden Alarms durchgeführt wird, der von dem Fahrer in dem folgenden Fahrzeug (102) in Form von ausgestrahltem Licht mit unterschiedlicher Wellenlänge, d.h. in unterschiedlichen Farben, wahrgenommen werden soll.

2. Verfahren (400) nach Anspruch 1, das ferner umfasst:
Anzeigen (403) für den Fahrer in dem folgenden Fahrzeug (102), dass von dem eingreifenden Fahrerassistenzsystem (500) des ersten Fahrzeugs (101) eine Warnbremse aktiviert wird.

3. Verfahren (400) nach Anspruch 1 oder 2, das ferner umfasst:
Warnen (404) des Fahrers in dem folgenden Fahrzeug (102), dass von dem eingreifenden Fahrerassistenzsystem (500) des ersten Fahrzeugs (101) eine automatische Vollbremsung aktiviert wird.

4. Eingreifendes Fahrerassistenzsystem (500) für ein erstes Fahrzeug (101) zur Alarmierung eines Fahrers in einem folgenden Fahrzeug (102) aufgrund eines von dem Fahrerassistenzsystem (500) erfassten Hindernisses (120) vor dem ersten Fahrzeug (101), wobei das eingreifende Fahrerassistenzsystem (500) umfasst:
einen Detektor (110), der zum Erfassen des Hindernisses (120) vor dem ersten Fahrzeug (101) eingerichtet ist; und **gekennzeichnet durch**
eine Alarmierungsvorrichtung (130, 140, 540), die dazu eingerichtet ist, den Fahrer in dem folgenden Fahrzeug (102) aufgrund des erfassten Hindernisses (120) vor dem ersten Fahrzeug (101) zu alarmieren, bevor die Bremsen des ersten Fahrzeugs (101) von dem eingreifenden Fahrerassistenzsystem (500) aktiviert werden, wobei die Alarmierungsvorrichtung (130, 140, 540) dazu eingerichtet ist, einen sich steigernden Alarm auszugeben, der von dem Fahrer in dem folgenden Fahrzeug (102) in Form von ausgestrahltem Licht mit unterschiedlicher Wellenlänge, d.h. in unterschiedlichen Farben, wahrgenommen werden soll.

5. Eingreifendes Fahrerassistenzsystem (500) nach Anspruch 4, wobei die Alarmierungsvorrichtung (130, 140, 540) ein Bremslicht (130) des ersten Fahrzeugs (101), Warnleuchten (140) des ersten Fahrzeugs (101), eine Hupe (540) des ersten Fahrzeugs (101) oder eine sonstige Alarmierungsvorrichtung (130, 140, 540) in dem ersten Fahrzeug (101) umfasst, die von dem Fahrer in dem folgenden Fahrzeug (102) erfasst werden kann.

6. Eingreifendes Fahrerassistenzsystem (500) nach einem der Ansprüche 4-5, das ferner umfasst:
einen Sender (330), der dazu eingerichtet ist, Informationen über das erfasste Hindernis (120) vor dem ersten Fahrzeug (101) drahtlos zu übertragen, um den Fahrer in dem folgenden Fahrzeug (102) über eine lokale Alarmierungsvorrichtung (320, 340, 350) in dem folgenden Fahrzeug (102) aufgrund des erfassten Hindernisses (120) zu alarmieren.

7. Eingreifendes Fahrerassistenzsystem (500) nach Anspruch 6, wobei der Sender (330) ferner dazu eingerichtet ist, Signale zum Aktivieren der Bremsen des folgenden Fahrzeugs (102) drahtlos zu übertragen.

8. Computerprogramm mit Programmcode zum Durchführen eines Verfahrens (400) nach einem der Ansprüche 1-3, wenn das Computerprogramm in einem Computer in dem ersten Fahrzeug (101) mit einem eingreifenden Fahrerassistenzsystem (500) nach einem der Ansprüche 4-7 ausgeführt wird.

9. Erstes Fahrzeug (101) mit dem eingreifenden Fahrerassistenzsystem (500) nach einem der Ansprüche 4-7.

## Revendications

1. Procédé (400) pour alerter un conducteur dans un véhicule suiveur (102) d'un obstacle (120) devant un premier véhicule (101), ledit premier véhicule ayant un système d'assistance au conducteur (500) intermédiaire ; lequel procédé (400) comprend :
la détection (401) de l'obstacle (120) devant le premier véhicule (101) par le système d'assistance au conducteur (500) ; et **caractérisé par**
l'alerte (402) du conducteur du véhicule suiveur (102) de l'obstacle (120) détecté (401) devant le premier véhicule (101), avant que les freins du premier véhicule (101) ne soient activés par le système d'aide à la conduite intervenant (500), l'alerte étant réalisée par l'émission d'une alerte incrémentale devant être perçue par le conducteur du véhicule suiveur (102) sous la forme d'une lumière émise à différentes longueurs d'onde, c'est-à-dire en différentes couleurs.

2. Procédé (400) selon la revendication 1, comprenant en outre
l'indication (403) au conducteur dans le véhicule suiveur (102) qu'un frein d'avertissement est activé par le système d'assistance au conducteur intermédiaire (500) du premier véhicule (101) .

3. Procédé (400) selon l'une quelconque de la revendication 1 ou de la revendication 2, comprenant en outre
l'avertissement (404) du conducteur dans le véhicule suiveur (102) que le freinage complet automatique est activé par le système d'assistance au conducteur intermédiaire (500) du premier véhicule (101).

4. Système d'assistance au conducteur intervenant (500) pour un premier véhicule (101), pour alerter un conducteur dans un véhicule suiveur (102) d'un obstacle (120) devant le premier véhicule (101), détecté par le système d'assistance au conducteur (500) ; dans lequel le système d'assistance au conducteur (500) comprend :
un détecteur (110), configuré pour détecter l'obstacle (120) devant le premier véhicule (101) ; et **caractérisé par**
un dispositif d'alerte (130, 140, 540) configuré pour alerter le conducteur dans le véhicule suiveur (102), de l'obstacle détecté (120) devant le premier véhicule (101), avant que les freins du premier véhicule (101) ne soient activés par le système d'assistance au conducteur intermédiaire (500), dans lequel le dispositif d'alerte (130, 140, 540) est configuré pour émettre une alerte d'incrémentation devant être perçue par le conducteur dans le véhicule suiveur (102) sous la forme d'une lumière émise à différentes longueurs d'onde, c'est-à-dire en couleurs différentes.

5. Système d'assistance au conducteur intervenant (500) selon la revendication 4, dans lequel le dispositif d'avertissement (130, 140, 540) comprend un feu de freinage (130) du premier véhicule (101), des feux d'avertissement (140) du premier véhicule (101), un avertisseur sonore (540) du premier véhicule (101), ou un autre dispositif d'avertissement (130, 140, 540) dans le premier véhicule (101), détectable pour le conducteur dans le véhicule suiveur (102) .

6. Système d'assistance au conducteur intermédiaire (500) selon l'une quelconque des revendications 4 à 5, comprenant en outre :
un émetteur (330) configuré pour transmettre sans fil des informations concernant l'obstacle détecté (120) devant le premier véhicule (101), pour alerter le conducteur dans le véhicule suiveur (102) de l'obstacle détecté (120) via un dispositif d'alerte local (320, 340, 350) dans le véhicule suiveur (102).

7. Système d'assistance au conducteur intervenant (500) selon la revendication 6, dans lequel l'émetteur (330) est en outre configuré pour émettre des signaux sans fil pour activer les freins du véhicule suiveur (102).

8. Programme informatique comprenant un code de programme pour l'exécution d'un procédé (400) selon l'une quelconque des revendications 1 à 3 lorsque le programme informatique est exécuté dans un ordinateur dans le premier véhicule (101) avec un système d'assistance au conducteur intervenant (500), selon l'une quelconque des revendications 4 à 7.

9. Premier véhicule (101) comprenant le système d'assistance au conducteur intermédiaire (500) selon l'une quelconque des revendications 4 à 7.
